(19) Europäisches Patentamt
European Patent Office
Office européen des brevets

(11) **EP 4 725 741 A1**

(12) **EUROPEAN PATENT APPLICATION**

(43) Date of publication:
**15.04.2026 Bulletin 2026/16**

(21) Application number: **25206606.3**

(22) Date of filing: **03.10.2025**

(51) International Patent Classification (IPC):
**B60L 1/00** (2006.01)   **B60L 3/12** (2006.01)
**B60L 58/10** (2019.01)   **H02J 7/00** (2026.01)

(52) Cooperative Patent Classification (CPC):
**B60L 1/00; B60L 3/12; B60L 58/10; H02J 7/62;**
B60L 2240/549; H02J 2105/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.10.2024 IT 202400022479**

(71) Applicant: **FPT Industrial S.p.A.**
**10156 Torino (IT)**

(72) Inventors:
• **DEL GIUDICE, Davide**
**10156 Torino (IT)**
• **HUTTER, Richard**
**10156 Torino (IT)**
• **GEHLEN, Manuel**
**10156 Torino (IT)**

(74) Representative: **Fiume, Orazio et al**
**Praxi Intellectual Property S.p.A.**
**Corso Vittorio Emanuele II, 3**
**10125 Torino (IT)**

(54) **OVERCURRENT PROTECTION SYSTEM FOR FULL ELECTRIC AND HYBRID VEHICLES**

(57) Method for protecting a vehicular battery (B) of a full electric or hybrid vehicle from overcurrent, wherein the vehicle includes at least one non-controllable component $(Y_1, Y_2, ...Y_m)$, at least one controllable component $(C_1, C_2, ...C_n)$ connected to the vehicular battery (B) through an electric bus (EBUS), the method including acquisition of a priority list of corresponding said at least one controllable components from a higher priority to a lower priority value; acquisition of rated power limit values for each of the controllable components and then, iteratively acquisition of power limits of the vehicular battery; acquisition of actual power exchanged between the component and electric bus and calculating the actual higher power limit $(\hat{P}_{k[n;1],max})$ and the actual lower power limit $(\hat{P}_{k[n;1],max})$ for each controllable component from the lowest priority component to the highest priority component.

EP 4 725 741 A1

Fig. 3

# EP 4 725 741 A1

## Description

<u>Field of the invention</u>

The present invention relates to an overcurrent protection system for full electric and hybrid vehicles.

<u>Description of the prior art</u>

While in the full electric vehicle the traction battery is generally sized to fulfill all the load needs of the vehicle, in hybrid powertrains the battery power is limited due to the typically smaller battery capacities.

In addition, further limitations can arise due to different reasons, as for example, due to a low battery state of charge (SoC) or a high battery temperature.

The battery itself has no means to limit the power exchanged drawn/recharged.

The traction battery provides power to or receives power from (high-voltage) components such as the inverter of propulsion motor, the electric heater, the electric cooling fan, the DCDC converter, the Air Conditioning unit, or the on-board charger.

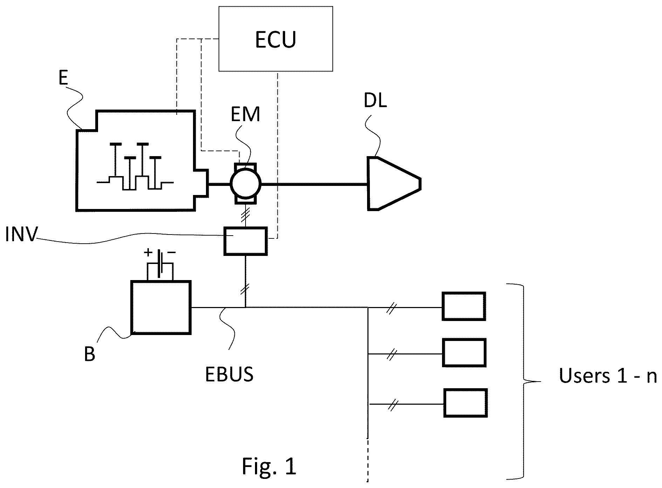

Figure 1 of the prior art discloses an example of a parallel hybrid vehicle comprising of a combustion engine E driving in rotation an electric machine EM and a driveline DL including, for example, a discrete gears device, a differential, wheels, and preferably a mechanical PTO as known.

The electric machine is connected to an electric bus EBUS through an inverter INV, to which further components 1-n and 1-m and the battery B are connected.

With "component" is intended any electrical device or user connected with the electric bus EBUS.

The electric components connected to the battery can be classified as either «controllable» or «non-controllable». While the power of a controllable components can be limited by a supervisory control unit, the power consumption of a non-controllable component is not a degree of freedom and must therefore be considered as a disturbance in the system. For example, one non-controllable component is a battery heater, which starts according a temperature value, and it cannot be switched off, otherwise it would imply a degradation of the battery performance. A non-controllable component is of the ON/OFF kind, thus the power exchanged with the bus cannot be adjusted in any way.

Further non-controllable components are

- the electric pump that lubricated the propulsion transmission;
- the Air conditioning system is directly controlled by the driver and cannot be in any way deactivated;
- the radiator fan or the AdBlue pump, in case the vehicle is a hybrid or range extended vehicle.

With the sole exclusion of the AC system, when one of the remaining non-controllable components is out of service, the vehicle must be recovered in a workshop.

In view of what above a non-controllable component cannot be controlled by an electric power manager onboard of the vehicle which supervises the electric energy exchanged with the electric bus, neither in terms of its activation nor in terms of energy exchanged.

Exceeding the battery's power limits (positive or negative) damages the battery. But, excessively limiting the power consumption of the controllable devices leads to reduction of the performances or a poorer fuel consumption of a hybrid vehicle; or, the battery must be oversized, leading to higher cost, weight, and size.

Therefore, an overcurrent protection function at system level is required to coordinate the controllable electric components that can act as sink or source accounting for the actual operating condition of the non-controllable components.

State machine based algorithms are known, however, they are complex to apply and become very complex, when accounting for multiple controllable components and operating conditions/scenarios.

The features disclosed in the prior art background are introduced only in order to better understand the invention and not as a declaration about the existence of known prior art. In addition, said features define the context of the present invention. Thus, such features shall be considered in common with the detailed description.

<u>Summary of the invention</u>

Therefore, the purpose of the present invention is to propose an overcurrent protection method, applicable to systems with at least one controllable component, capable to optimize the use of a vehicular traction battery.

The main challenge is to render the overcurrent protection system robust and at the same time not too conservative. According to the invention, controllable, non-controllable electric components and a battery are interconnected through an electric bus.

The main principle of the invention includes the following steps:

- Acquiring a priority list of corresponding controllable components from the higher priority to the lower priority value;
- List the controllable components according to the priority list acquired in the previous step, the controllable component with the highest priority are assigned the number 1 and the least prioritized component the number n, and preferably queuing the at least one non-controllable component in the same list or in a different list, for convenience they are put in the same list following the controllable components such that it is assigned with the number starting from n+1 up to n+m;
- Acquiring rated power limits for each of the controllable components;

And iteratively

- Acquiring power limits, namely the minimum and maximum power values that the battery is capable to exchange with the electric bus;
- Acquiring actual power exchanged of n controllable and m non-controllable components with the electric bus,
- Calculating actual power limits for all k controllable components from the lower k = n priority components to the higher k = 1 priority components according to the following formulas:

$$\hat{P}_{k[n:1],max} = \max \left( P_{k[n:1],min}, \min \left( P_{k[n:1],max}, P_{b,max} - \sum_{j=1}^{k-1} P_{j,act} \right.\right.$$

$$\left.\left. - \sum_{j=k+1}^{n} \hat{P}_{j,min} - \sum_{j=n+1}^{m+n} P_{j,act} \right)\right)$$

$$\hat{P}_{k[n:1],min} = \max \left( P_{k[n:1],min}, \min \left( P_{k[n;1],max}, P_{b,min} \right.\right.$$

$$\left.\left. - \sum_{j=1}^{k-1} P_{j,act} - \sum_{j=k+1}^{n} \hat{P}_{j,max} - \sum_{j=n+1}^{m+n} P_{j,act} \right)\right)$$

Calculating the power limits for each k-th controllable component belonging to the n ones, from the lower priority component, to the higher one, where $P_{b,min}$ and $P_{b,max}$ are the battery power limits and the $P_{k[n;1],min}$ and $P_{k[n;1],max}$ are the rated power limits of the k-th component and $P_{j,act}$ represents the actual power exchanged by the j-th controllable component different from the k-th component and the non-controllable component;

- Setting the calculated actual power limits to the corresponding controllable component;

then coming back to the step "Acquiring power limits".

The present method is carried out continuously during vehicle operation, adjusting the values of the electric energy that each of the controllable component can exchange with the electric bus. Therefore, the acquisition of the actual higher and lower power limit values of the vehicular battery and of the actual power values exchanged between the at least one controllable component and the electric bus and between said at least one non-controllable component and the electric bus, is carried out only after that all the n values $\hat{P}_{k[n:1],max}$ and $\hat{P}_{k[n:1],min}$ are calculated.

Therefore, the method includes two nested loops.

The above equations can be described respectively as:

- The actual higher power limit calculated as the maximum value chosen between the lower rated value of the same component and the minimum value chosen between the higher rated value of the same component and the actual maximum residual available power.
- The actual lower power limit is calculated as the maximum value chosen between the lower rated value of the same component and the minimum value chosen between the higher rated value of the same component and the actual minimum residual available power.

It is clear from the comparison of those definitions and the above equations that the actual maximum residual available power is given by the difference between the higher battery power and the algebraic sum of the actual powers exchanged with the electric bus by the higher prioritized controllable users, the minimum power limit of the lower prioritized controllable components and the actual powers exchanged of any non-controllable users. The minimum residual available power is given by the difference between the lower battery power and the algebraic sum of the actual powers exchanged with the electric bus by the higher prioritized controllable users, the maximum power limit of the lower prioritized controllable components and the actual powers exchanged of any non-controllable users.

According to the skilled person in the art, the term "queueing" means adding to the items of a list, further items, without any modification of the items previously present in that list. The fact that only one list is adopted is absolutely option, indeed the non-controllable components can be numbered as from 1 to m, instead from n + 1 to n + m. Once that the list(s) is(are) complete, no further modification is adopted on the list throughout the execution of the recursive steps of the method.

According to the present description, the term "actual" is used as synonym of "current" or "present". "Actual" is preferred for improve clarity not to be confused with the flowing of electrons.

In addition, in view of the use of that attribute referring to the values considered, this means that the present method is carried out on-line, namely, acquiring the values to perform the required calculations before the execution of the inner nested loop.

It should be considered that the power value can assume a positive or a negative value according to the nature of the component. For example, the propulsion inverter can drain power from the battery during propulsion and supply power to battery during a regenerative braking.

The present method is implemented in a control unit configured to supervise the function of at least one controllable component.

These and further objects are achieved by means of the attached claims, which describe preferred embodiments of the invention, forming an integral part of the present description.

Brief description of the drawings

The invention will become fully clear from the following detailed description, given by way of a mere exemplifying and non-limiting example, to be read with reference to the attached drawing figures, wherein:

- Fig. 1 shows a prior art hybrid vehicle to which the present invention is applicable;
- Fig. 2 discloses a scheme of the data exchanged between the electric components connected to the electric bus and a control unit configured to set power limits to the controllable unit according to the actual power value exchanged on the electric bus;
- Fig. 3 discloses a flow diagram of the functioning of the control unit of figure 2.

The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

Detailed description of the preferred embodiments

According to the present invention, the actual controllable power limits are calculated on-line in such a way that the power limits of the battery are exploited, but without subjecting it to conditions of overcurrent.

Therefore, when one component, controllable or non-controllable, is drawing only little power, another controllable component is allowed to increase its power consumption.

For convenience, we can assume as positive a power drained by a component from the battery and negative a power sent to the battery to recharge it.

The rated power values are given by the manufacturer of the same component or stably set in the firmware of the controller on-board of the same component.

The power limits are calculated online based on received data including the amount of power exchanged by each component with the electric bus EBUS.

The present method doesn't require any calibration of a state-machine that maps all possible scenarios to the desired control behaviour. It is easily implementable on a control unit ECU configured, on-board of the vehicle, to supervise the electric system and to manage the controllable components.

The ECU can directly measure the power exchanged by the components and the electric bus or can receive such data by a vehicular data network, such a as a CAN BUS net.

A list of priorities is supplied to the ECU. It can be decided by the manufacturer of the vehicle according to its own politics. This aspect is no part of the invention.

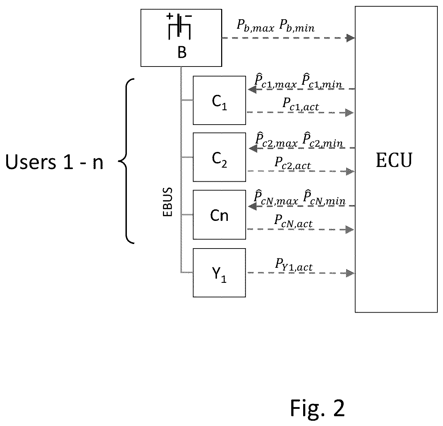

In addition, when new components are connected to the vehicle the priority list can be easily updated without any effort to reprogram the control unit, whose logic remains unchanged. Fig. 2 discloses an example of vehicle including the controllable components $C_1$, $C_2$ ...$C_n$ and at least one non-controllable component $Y_1$, $Y_2$...$Y_m$, a battery B and the control unit ECU.

It should be clear that the vehicle could be provided with a larger number of controllable components, but the present strategy can be applicable if at least one controllable component is connected to the electric bus.

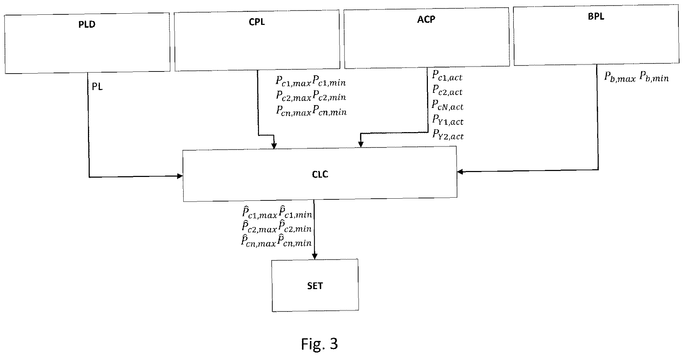

Figure 3 schematizes the method subject of the present invention.

The control unit acquires at least one time the list PL of the priorities, from the non-volatile memory PLD, corresponding to the components connected to the electric bus EBUS and the rated power limits of the controllable components CPL.

Iteratively, the control unit acquires the battery power limits $P_{b,min}$, $P_{b,max}$ from the battery management system BPL and acquires the actual values of the power exchanged by all the components connected to the electric bus by the block ACP which can represent any device which detain such an information and calculates the actual power limits, minimum $\hat{P}_{k[n;1],min}$ and maximum $\hat{P}_{k[n;1],max}$ of the k-th controllable component starting from the less relevant one, namely the one associated to the lower priority.

As described above, the actual maximum or higher power limit is calculated as the maximum value chosen between the lower rated value $P_{k[n:1],min}$ of the same component and the minimum value chosen between the higher rated value $P_{k[n:1],max}$ of the same component and the actual maximum residual available power

$$P_{b,max} - \sum_{j=1}^{k-1} P_{j,act} - \sum_{j=k+1}^{n} \hat{P}_{j,min} - \sum_{j=n+1}^{m+n} P_{j,act} .$$

As described above, the actual minimum or lower power limit is calculated as the maximum value chosen between the lower rated value $P_{k[n:1],min}$ of the same component and the minimum value chosen between the higher rated value $P_{k[n:1],max}$ of the same component and the actual minimum residual available power

$$P_{b,min} - \sum_{j=1}^{k-1} P_{j,act} - \sum_{j=k+1}^{n} \hat{P}_{j,max} - \sum_{j=n+1}^{m+n} P_{j,act} .$$

Example 1

- Battery power limits = +/- 15kW
- $P_{FAN,act}$ = 10kW
- $P_{INV,min}$ = -10kW
- $P_{INV,max}$ = +10kW

We suppose that the fan cannot be controlled, while the power of the inverter is controllable.

By applying the present method, the actual minimum power of the inverter $P_{INV,min}$ is -l0kW, therefore, the inverter is effectively not limited to inject power on the electric bus, but the maximum power that the inverter can drain by the battery is automatically calculated as +5kW.

Example 2

- Battery power limits = +/- 5kW
- $P_{FAN,act}$ = 10kW
- $P_{AC,act}$ = 0kW
- $P_{INV,act}$ = -5kW
- Priority list: First (highest) priority: AC, second (least) priority: Inverter

We suppose that the fan cannot be controlled, while both the powers of the inverter INV and the air conditioning system AC are controllable.

By applying the present method, the maximum power limit calculated for the inverter is +5kW and for the air-conditioning system AC is +5kW. Thus, in this example, not only the least prioritized component (inverter) is limited in terms of maximum power but also the second prioritized component the air conditioning system is allowed to drain only up to +5kW from the battery.

Example embodiments are provided so that this disclosure will be thorough, and will fully convey the scope to those who are skilled in the art.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

Further implementation details will not be described, as the man skilled in the art is able to carry out the invention starting from the teaching of the above description.

## Claims

1. Method for protecting a vehicular battery (B) of a full electric or hybrid vehicle from overcurrent, wherein the vehicle includes

   - at least one controllable component ($C_1$, $C_2$, ...$C_n$),
   - one or more non-controllable components ($Y_1$, $Y_2$, ...$Y_m$), Connected to the vehicular battery (B) through an electric bus (EBUS), wherein the controllable components can be controlled by an energy manager device and the non-controllable components cannot be controlled by the energy manager neither in terms of their activation nor in terms of power exchanged with the electric bus;
   The method including the following steps:

      - Acquisition of a priority list of said at least one controllable component from a higher priority to a lower priority value;
      - Listing on a list the controllable components according to the priority list from the highest priority to the lowest priority [1 to n] and
      - Acquisition of the non-controllable components;
      - Acquisition of higher and lower rated power limit values for each of the controllable components;

   And iteratively

      - Acquisition of actual higher and lower power limit values of the vehicular battery;
      - Acquisition of actual power values exchanged between the at least one controllable component and the electric bus and between said at least one non-controllable component and the electric bus,
      - calculating actual higher and lower power limits for each of the controllable components from the lower priority components to the higher priority components as

         . The actual higher power limit value ($\hat{P}_{k[n;1],max}$) as a maximum value chosen between the lower rated value ($P_{k[n;1],min}$) of the same component (k-th) and a minimum value chosen between the higher rated value ($P_{k[n;1],max}$) of the same component (k-th) and an actual maximum residual available power value (

         $$P_{b,max} - \sum_{j=1}^{k-1} P_{j,act} - \sum_{j=k+1}^{n} \hat{P}_{j,min} - \sum_{j=n+1}^{m+n} P_{j,act}$$ ) that the battery can provide considering a power value ( $\sum_{j=n+1}^{m+n} P_{j,act}$ ) exchanged by the non-controllable components with electric bus;
         . The actual lower power limit value ($\hat{P}_{k[n;1],min}$) as the maximum value chosen between the lower rated value ($P_{k[n;1],min}$) of the same component (k-th) and the minimum value chosen between the higher rated value ($P_{k[n;1],max}$) of the same component and the actual minimum residual available power value (

         $$P_{b,min} - \sum_{j=1}^{k-1} P_{j,act} - \sum_{j=k+1}^{n} \hat{P}_{j,max} - \sum_{j=n+1}^{m+n} P_{j,act}$$ ) that the battery can provide considering a power value ( $\sum_{j=n+1}^{m+n} P_{j,act}$ ) exchanged by the non-controllable components with the electric bus.

2. Method according to claim 1, wherein said actual maximum and minimum residual available power values are given respectively by the difference between the higher and lower battery power values ($P_{b,max}$ $P_{b,min}$) and the algebraic sum of the current power values exchanged with the electric bus by the higher prioritized controllable components, the respectively minimum and maximum limit of the lower prioritized controllable components and the actual powers exchanged of any non-controllable components.

3. Method according to claim 1 or 2, wherein one or more non-controllable components are listed in said list arranged after the n controllable components as n + 1 to m and wherein said actual maximum and minimum residual available power values for the k-th component are given respectively by the following expressions:

$$P_{b,max} - \sum_{j=1}^{k-1} P_{j,act} - \sum_{j=k+1}^{n} \hat{P}_{j,min} - \sum_{j=n+1}^{m+n} P_{j,act}$$

and

$$P_{b,min} - \sum_{j=1}^{k-1} P_{j,act} - \sum_{j=k+1}^{n} \hat{P}_{j,max} - \sum_{j=n+1}^{m+n} P_{j,act}$$

Wherein

- $P_{b,max}$ and $P_{b,min}$ represent the maximum and minimum battery power limit respectively;

- $\sum_{j=1}^{k-1} P_{j,act}$ represents the sum of the power values exchanged with the electric bus by the controllable components having a higher priority than the k-th component;

- $\sum_{j=n+1}^{m+n} P_{j,act}$ represents the sum of the power values exchanged by the one or more non-controllable components with the electric bus;

- $\sum_{j=k+1}^{n} \hat{P}_{j,min}$ and $\sum_{j=k+1}^{n} \hat{P}_{j,max}$ represent respectively the actual lower and actual higher power limits of the controllable components that have a lower priority than the k-th component.

4. System for protecting a vehicular battery (B) of a full electric or hybrid vehicle from overcurrent, wherein the vehicle includes

- at least one controllable component ($C_1$, $C_2$, ...$C_n$),
- one or more non-controllable components ($Y_1$, $Y_2$, ...$Y_m$) Connected to the vehicular battery (B) through an electric bus (EBUS),

the system including a control unit (ECU) configured to
To execute all the steps of any one of claims 1 - 3.

5. A fully electric or hybrid land vehicle comprising a propulsion battery and the system for protecting the vehicle battery according to claim 4.

Fig. 1

Fig. 2

| PLD | CPL | ACP | BPL |
|---|---|---|---|

PL

$P_{c1,max} P_{c1,min}$
$P_{c2,max} P_{c2,min}$
$P_{cn,max} P_{cn,min}$

$P_{c1,act}$
$P_{c2,act}$
$P_{cN,act}$
$P_{Y1,act}$
$P_{Y2,act}$

$P_{b,max} \; P_{b,min}$

CLC

$\hat{P}_{c1,max} \hat{P}_{c1,min}$
$\hat{P}_{c2,max} \hat{P}_{c2,min}$
$\hat{P}_{cn,max} \hat{P}_{cn,min}$

SET

Fig. 3

EP 4 725 741 A1

# EUROPEAN SEARCH REPORT

**Application Number**

EP 25 20 6606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2025/172816 A1 (MASERATI SPA [IT]) 21 August 2025 (2025-08-21) | 1,2,4,5 | INV.<br>B60L1/00 |
| Y,P | * page 1, lines 6-10, 26-29, 35 *<br>* page 2, lines 1-14 *<br>* page 4, lines 14-16 *<br>* page 5, lines 33-35 *<br>* page 6, line 35 *<br>* page 7, lines 1-5 *<br>* page 11, line 26 *<br>* page 18, lines 20-22 *<br>* page 28, lines 13-17 *<br>* figure 1 *<br>----- | 3 | B60L3/12<br>B60L58/10<br>H02J7/00 |
| Y | CN 109 878 375 B (SHANGHAI NIO AUTOMOBILE CO LTD) 15 October 2021 (2021-10-15)<br>* title;<br>paragraphs [0001], [0009], [0029], [0032], [0034], [0041], [0042], [0048], [0058] *<br>----- | 3 | |

**TECHNICAL FIELDS SEARCHED (IPC)**

B60L
H02J

The present search report has been drawn up for all claims

| Place of search | Date of completion of the search | Examiner |
|---|---|---|
| The Hague | 10 February 2026 | Lutz, Tobias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 6606

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2026

| Patent document cited in search report | Publication date | Patent family member(s) | Publication date |
|---|---|---|---|
| WO 2025172816 A1 | 21-08-2025 | NONE | |
| CN 109878375 B | 15-10-2021 | NONE | |

EPO FORM P0459

For more details about this annex : see Official Journal of the European Patent Office, No. 12/82